# EUROPÄISCHE PATENTSCHRIFT

(11) **EP 3 141 122 B1**
(45) Veröffentlichungstag und Bekanntmachung des Hinweises auf die Patenterteilung: **06.07.2022**
(21) Anmeldenummer: 16164668.2
(22) Anmeldetag: 11.04.2016
(51) Int. Cl.: A21C 3/00

(54) **VORRICHTUNG UND VERFAHREN ZUR SEITLICHEN BEAUFSCHLAGUNG EINES TEIGBANDES**
DEVICE AND METHOD FOR LATERALLY IMPACTING A STRIP OF DOUGH
DISPOSITIF ET PROCÉDÉ D'INJECTION LATÉRALE D'UNE BANDE DE PÂTE

(30) Priorität: 10.09.2015 DE 102015115299
(43) Veröffentlichungstag der Anmeldung: 15.03.2017
(73) Patentinhaber: Fritsch Bakery Technologies GmbH & Co. KG, 97348 Markt Einersheim (DE)
(72) Erfinder: Bernhardt, Udo, 97346 Iphofen (DE)
(74) Vertreter: Grünecker Patent- und Rechtsanwälte PartG mbB

(56) Entgegenhaltungen:
- EP-A1- 0 882 400
- DE-A1-102010 027 622
- JP-A- 2012 201 367
- SU-A1- 99 352
- US-A- 2 728 307

## Beschreibung

Die Erfindung betrifft eine Vorrichtung, die zum seitlichen Beaufschlagen, insbesondere zum Verschieben wenigstens eines auf einer Fördereinrichtung aufliegenden Teigbandes dient.

Eine aus DE 297 01 345 U1 bekannte Vorrichtung weist ein Drückorgan zur formgebenden Einwirkung auf wenigstens einen Rand des Teigbandes oder Teigstückes auf, wobei das wenigstens eine Drückorgan durch wenigstens ein Antriebsmittel bezogen auf wenigstens einen Rand bewegbar geführt ist. Die bekannte Vorrichtung weist für die beidseitigen Drückorgane gesonderte Antriebe auf, sodass eine synchrone Beaufschlagung der beiden Teigränder durch sich gegenüberliegende Drückorgane nicht gewährleistet ist.

Aus EP 1 198 989 B1 ist eine Vorrichtung bekannt, die zum kontinuierlichen transportieren eines fortlaufenden Teigbandes dient, wobei das Teigband durch eine Schiebevorrichtung nach links oder rechts bewegt werden kann, abhängig vom Signal eines Teigbandlagesensors. Die Schiebevorrichtung umfasst eine Zentrierwalze, die auf einer Kurbelachse mit einem motorischen Antrieb angeordnet ist. Das Teigband liegt auf der Schieberachse auf und diese wird je nach Versatz des Teigbandes zu einer gewollten Mittellage bezogen auf die Transportrichtung hin-oder her bewegt.

SU 99 352 A1 offenbart eine Fördereinrichtung für Backwaren, bei der die Backwaren mittels Stellelementen versetzt angeordnet werden können.

Der Erfindung liegt die Aufgabe zugrunde, eine Vorrichtung mit den Merkmalen des Oberbegriffes des Anspruches 1 derart auszubilden, dass das Teigband im Bereich der Fördereinrichtung auf sichere, einfache und platzsparende Weise in eine Sollmittellage gebracht wird, wobei insbesondere eine Stressbildung oder Spannungsbildung im Randbereich des Teigbandes vermieden werden soll.

Das Erreichen einer exakten Sollmittellage auf einem Fördermittel ist insbesondere dann von hoher Bedeutung, wenn das Teigband oder mehrere Teigbänder einer Stanzvorrichtung zugeführt werden, in der die Teigbänder in Teigabschnitte, insbesondere Dreiecke geschnitten werden. Würde ein Teigband oder mehrere Teigbänder abweichend von einer Sollmittellage in eine derartige Schneidevorrichtung einlaufen, dann würden Dreiecke unterschiedlicher Basislängen ausgestanzt, so dass die Teigdreiecke z.B. beim Einlaufen in eine Hörnchenwickelmaschine zu Produkten minderer Formqualität und unterschiedlichem Gewicht führen können. Dies soll vermieden werden. Patentansprüche 14 und 15 betreffen ein Verfahren, das mit der Vorrichtung der Ansprüche 1 - 13 mit besonderem Vorteil und hoher Geschwindigkeit durchgeführt werden kann.

Diese Aufgabe wird durch die kennzeichnenden Merkmale des Anspruches 1 gelöst, vorteilhafte Weiterbildungen des Anspruches 1 ergeben sich aus den Unteransprüchen.

Das Drückorgan, das einen Rand des Teigbandes beaufschlagt, d. h. bei Versatz des Teigstückes zu einer Sollmittellage einen Druck auf den Rand ausübt, führt eine überlagerte, in Förderrichtung mitlaufende Bewegung aus. Mit anderen Worten beaufschlagt das Drückorgan das Teigband nicht nur rechtwinkelig zur Förderrichtung, sondern gibt dem Teigband auch noch einen in Förderrichtung überlagerten Impuls mit, was einen sicheren Versetzen des Teigbandes entgegenkommt und insbesondere eine Eindellung, Verformung, Aufstülpung oder sonstige Beschädigung, insbesondere ein Einreißen des Teigrandes vermeidet.

Vorteilhafter Weise ist das wenigstens eine Drückorgan im Randbereich des Teigbandes auf einer Kreisbahn oder kreisähnlichen Bahn umlaufend antreibbar, wobei der Umlauf jeweils so gewählt ist, dass der überlagerte Verschiebeimpuls in Förderrichtung des Teigbandes verläuft. Vorteilhafter Weise sind zwei sich im wesentlichen gegenüberliegende Drückorgane benachbart zu beiden Randbereichen des Teigbandes angeordnet, wobei die Drückorgane gegenläufig pulsierend in Richtung der Ränder der Teigbandes angetrieben werden. Die Bewegungskomponente des oder der Drückorgane kann in Förderrichtung des Teigbandes einstellbar gestaltet sein.

Die Drückorgane können einzeln oder in Gruppen auf umlaufenden Exzentern gelagert werden, deren Drehachse rechtwinkelig zur Förderrichtung angeordnet ist.

Eine gruppenartige Anordnung der Drückorgane ist so gewählt, dass die Drückorgane der einen Randseiten von mehreren Teigbändern, die auf der Fördereinrichtung im Wesentlichen parallel transportiert werden sollen auf einem gemeinsamen schienenartigen Trägerelement befestigt sind und die Drückorgane der jeweils gegenüberliegenden Seite oder Seiten auf einem weiteren schienenartigen Trägerelement angeordnet sind.

Die beiden Trägerelemente werden durch gegenläufig umlaufende Exzenter-Antriebe angetrieben. Dies führt einerseits zu einer gegenläufigen pulsierenden und synchronen Bewegung in Richtung der Teigränder, andererseits auch zu einer Hin- und Herbewegung rechtwinkelig zur Längsrichtung der Trägerelemente.

Die Drückorgane sind als die Randbereiche des Teigbandes beaufschlagende streifenartige Elemente ausgebildet, deren Enden von den Rändern vorteilhafter Weise weggebogen sind. Es ist aber auch möglich, die Drückorgane federnd an den Trägerelementen anzuordnen und/oder gegenüber den Trägerelementen sogar einen gewissen Schlupf in Förderrichtung zu erlauben, sodass die Beaufschlagung der Randbereiche besonders schonend erfolgt.

Die beiden Trägerelemente verlaufen mit geringem Abstand parallel zueinander, und werden durch ihre an jeweils einem Antriebsende angeordneten Exzenterantriebe gegenläufig pulsierend bewegt, sodass die an ihnen befestigten Drückorgane die gegenläufigen Pulsationsbewegungen zum Versatz der Teigbahn durchführen, sofern die Teigbahnen außerhalb ihrer Sollmittellage auf der Transporteinrichtung geführt wird. Die Drückorgane können bezogen auf den zu beaufschlagenden Rand der Teigbahn einstellbar an ihren Trägerelementen angeordnet sein, wozu die Drückorgane vorteilhafterweise in quer zur Förderrichtung verlaufenden Langlöchern befestigt werden. Die Trägerelemente sind an ihren zueinanderweisenden Randbereichen gegeneinander verschiebbar geführt und können damit zusammenhängend auf einfache Weise ausgetauscht werden, sofern in der Produktionslinie eine geänderte Anzahl von Teigbahnen ggf. mit anderer Bandbreite bearbeitet werden soll.

Die Drückorgane können auch einzeln austauschbar an ihrem Trägerelement befestigt sein, sodass je nach Teigtyp einzeln Organe unterschiedlicher Form oder Länge eingesetzt werden können.

Schließlich ist es noch möglich jedes Drückorgan auch als Rollengang auszubilden oder zumindest abschnittsweise im Bereich des Drückorgans einen Rollengang vorzusehen.

In besonders vorteilhafter Weise erlaubt die, wie beschrieben ausgebildete Vorrichtung das kontrollierte teigschonende Versetzen von mehreren nebeneinander verlaufenden Teigbahnen auf einer Fördereinrichtung, insbesondere einem Förderband. Die Vorrichtung ist einfach ausgebildet, eine Mehrzahl von Teigbändern können durch nur zwei Exzenterelemente, die gegenläufig umlaufen und eine Vielzahl von Drückorganen hin- und her bewegen können, versetzt werden.

Die Erfindung ist anhand von Ausführungsbeispielen in den Zeichnungsfiguren näher erläutert. Diese zeigen:
- Fig. 1: eine Draufsicht auf einen Produktionslinienabschnitt einer Fördereinrichtung zur Förderung von fünf einlaufenden Teigbahnen, die einer Stanzeinrichtung zugeführt werden, wobei zwischen einer Schneidevorrichtung und der Stanzvorrichtung die erfindungsgemäße Vorrichtung zum Versetzen der Teigbahnen angeordnet ist;

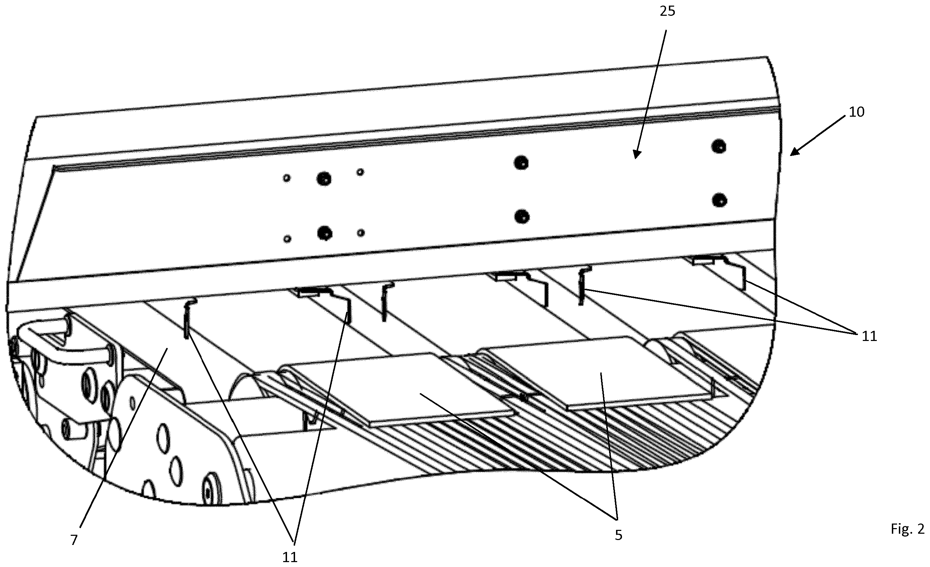

- Fig. 2: eine perspektivische Teilansicht der Vorrichtung;
- Fig. 3: eine weitere perspektivische Ansicht der beiden Trägerelemente der Vorrichtung mit den daran angeordneten Drückorganen;
- Fig. 4: eine schematische Draufsicht auf zwei Teigbandabschnitte im Bereich der Vorrichtung, wobei der rechts dargestellte Teigbandabschnitt noch zur Mittelsolllage versetzt ist und der links dargestellte Teigbandabschnitt durch die beiden Drückorgane bereits in seine Solllage verbracht ist;

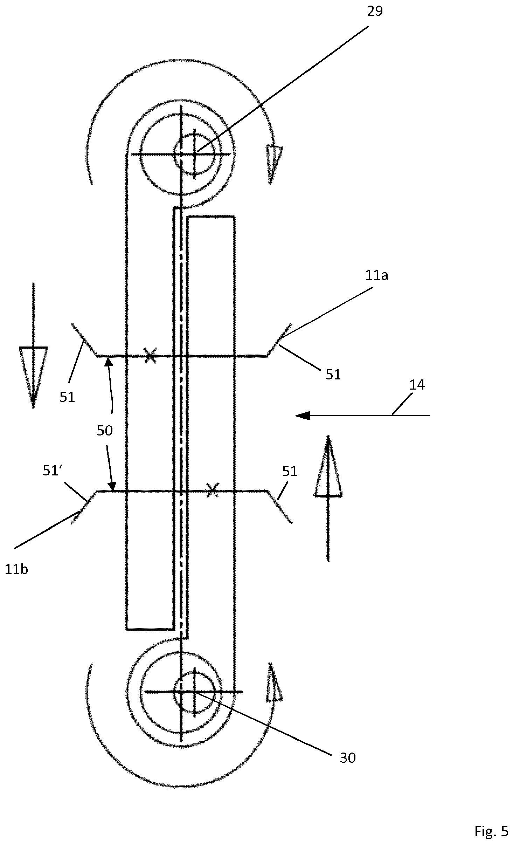

- Fig. 5: eine schematische Draufsicht auf zwei parallel zueinander geführte Trägerelemente der Vorrichtung mit zwei gegenüberliegend angeordneten Drückorganen für lediglich eine Teigbahn;
- Fig. 6: eine detaillierte Draufsicht gem. Fig. 6;
- Fig. 7: eine perspektivische Ansicht von Führungselementen zur gegenseitigen Führung zweier parallel zueinander geführter Trägerelemente der Vorrichtung über einer Motoranordnung mit gekoppelten Exzentergetrieben.

Zunächst wird auf Zeichnungsfigur 1 Bezug genommen.

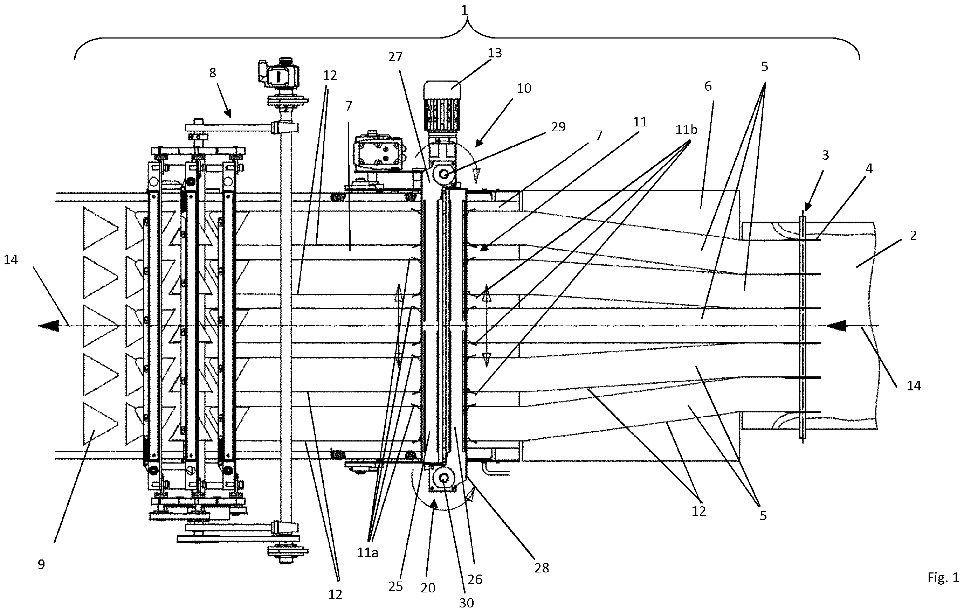

In Figur 1 ist in Draufsicht ein Produktionslinienabschnitt 1 dargestellt, in den von der rechten Seite her eine ungeschnittene Teigbahn 2 einer Schneidevorrichtung 3 mit beabstandet angeordneten Schneidscheiben 4 zugeführt wird. Als Resultat dieses Schneidvorganges liegen fünf schmale Teigbahnen 5 vor, die im Bereich eines Spreizbandes 6 auseinandergezogen werden. Im auseinandergezogenen Zustand liegen sie auf einer Fördereinrichtung 7 in Form eines Förderbandes auf und werden auf diesem einer Stanzeinrichtung 8 zugeführt, in welcher die schmalen Teigbahnen 5 in weitgehend identische Teigdreiecke 9 durch einen Stanzvorgang geschnitten werden. Zwischen dem Spreizband 6 und der Stanzvorrichtung 8, d. h. im Bereich der Fördereinrichtung 7 ist die erfindungsgemäße Vorrichtung zur seitlichen Beaufschlagung des oder der Teigbänder 5 angeordnet, die Gegenstand dieser Erfindung ist. Es sei angemerkt, dass die Anordnung dieser Vorrichtung 10 zur seitlichen Beaufschlagung der Teigbänder nicht notwendiger Weise innerhalb des als Beispiel gewählten Produktionslinienabschnittes 1 angeordnet werden muss, sondern auch überall dort eingesetzt werden kann, wo einzelne Teigbänder oder Teigbandabschnitte auf einer Fördereinrichtung 7 in eine gewisse Sollmittellage verbracht werden müssen.

Die Vorrichtung 10 zur seitlichen Beaufschlagung des wenigstens einen auf der Fördereinrichtung 7 aufliegenden Teigbandes 5 weist Drückorgane 11 auf, die zur verschiebenden Einwirkung auf wenigstens einen Rand 12 des Teigbandes 5 oder Teigstückes dienen, wobei die Drückorgane 11 durch ein Antriebsmittel, nämlich einen Elektromotor 13 bezogen auf den wenigstens einen Rand 12 bewegbar geführt sind.

Erfindungsgemäß führen die Drückorgane 11 bei der Beaufschlagung der Ränder 12 des Teigbandes 5 überlagert zu der gegen den Rand 12 geführten Schiebebewegung in Förderrichtung 14 des Teigbandes 5 eine Bewegung durch, die als in Förderrichtung 14 mitlaufende Bewegung bezeichnet werden kann. Das Drückorgan 11 ist im Randbereich des Teigbandes 5 auf einer kreisähnlichen Bahn umlaufend angetrieben, sich im wesentlichen gegenüberliegende Drückorgane 11 führen gegen in Richtung der Ränder 12 des Teigbandes 5 eine gegenläufig pulsierende Verschiebebewegung aus. Die zusätzliche Bewegungskomponente der Drückorgane 11 in Förderrichtung 14 des oder der Teigbänder 5 kann hinsichtlich ihrer Geschwindigkeit und hinsichtlich des Vorschubes eingestellt werden und damit an die Fördergeschwindigkeit der Fördereinrichtung 7 angepasst werden, d. h. sie kann höher als die Fördergeschwindigkeit gewählt werden oder auch niedriger.

Die Drückorgane 11 sind beim Ausführungsbeispiel in Gruppen durch umlaufende Exzenter 29, 30 gelagert, deren Drehachsen 21 im Wesentlichen rechtwinkelig zur Förderrichtung 14 angeordnet ist.

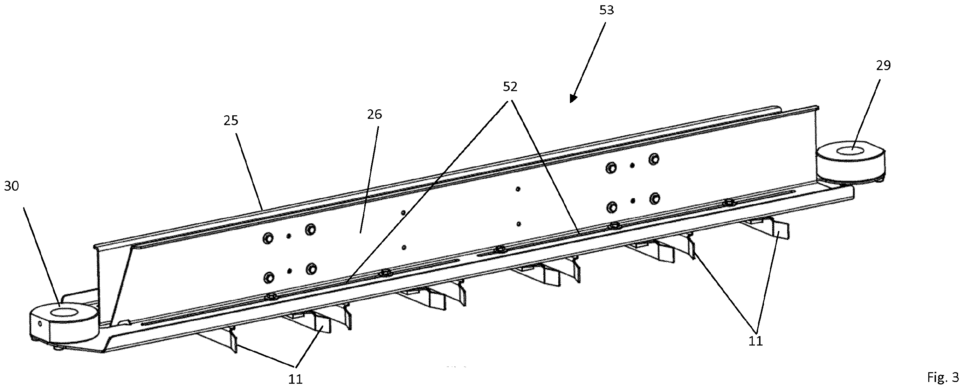

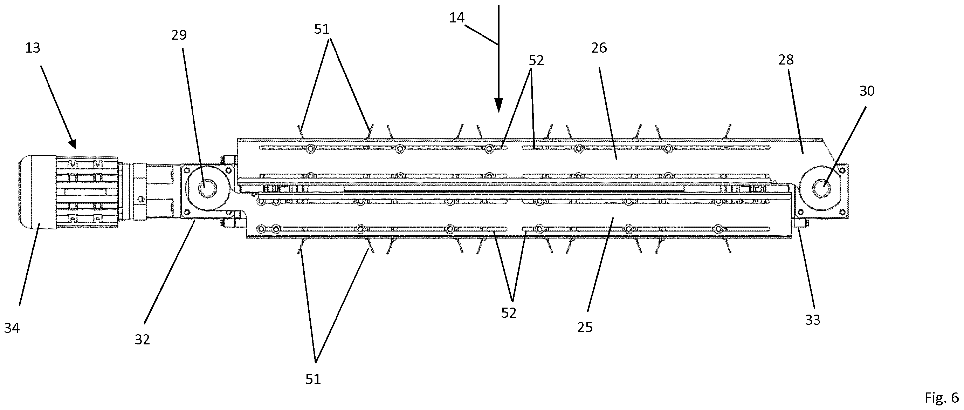

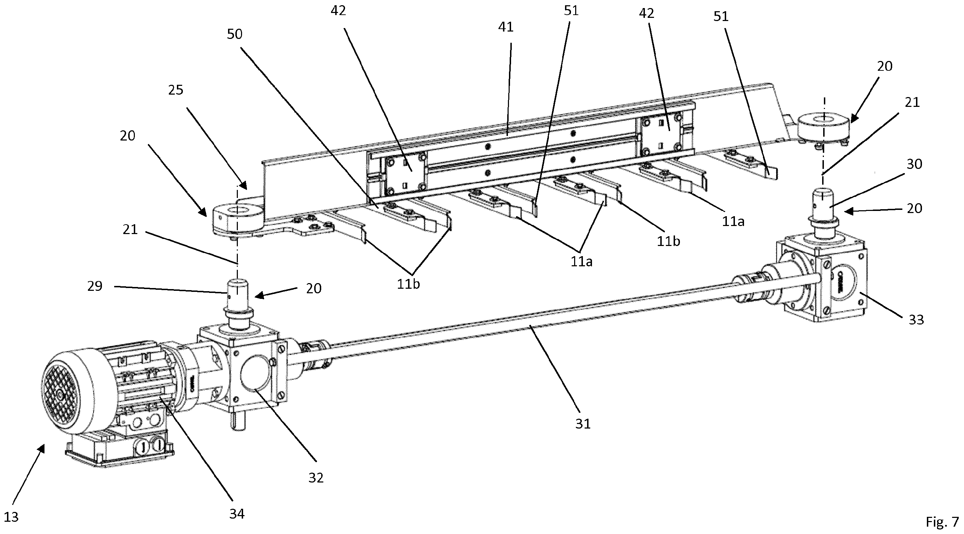

Beim dargestellten Ausführungsbeispiel in den Figuren 1, 3, 6 und 7 sind jeweils 5 Drückorgane 11a auf einem ersten Trägerelement 25 angeordnet, es handelt sich dabei um die Drückorgane 11, die in Förderrichtung die linken Ränder 12 der Teigbänder 5 beaufschlagen. Die den Drückorganen 11a gegenüberliegenden Drückorgane 11b sind auf einem weiteren Trägerelement 26 befestigt und beaufschlagen die in Förderrichtung 14 rechtsseitigen Ränder 12 der Teigbänder 5.

Aus Zeichnungsfigur 4 ist ersichtlich, dass der minimale Abstand der sich gegenüberliegenden Drückorgane 11a, 11b etwa dem Abstand der Schneidscheiben 4 der Schneidevorrichtung 3 und damit der Breite der Teigbänder 5 entspricht. Der maximale Abstand ist größer und kann abhängig von der Ausbildung der Exzenter 20 eingestellt werden, in der Regel ist der maximale Abstand 4 - 8 mm größer als der minimale der Teigbandbreite entsprechende Abstand der Drückorgane 11a, 11b.

Die schienenartigen Trägerelemente 25, 26 sind mit einem Antriebsende 27, 28 auf jeweils einem motorisch angetriebenen Exzenter 29, 30 gelagert, wobei die Exzenter über eine Antriebswelle 31 und geeignete Getriebeeinheiten 32, 33 an einen Elektromotor 34 des Antriebsmittels angekoppelt sind, dessen Geschwindigkeit regelbar ist.

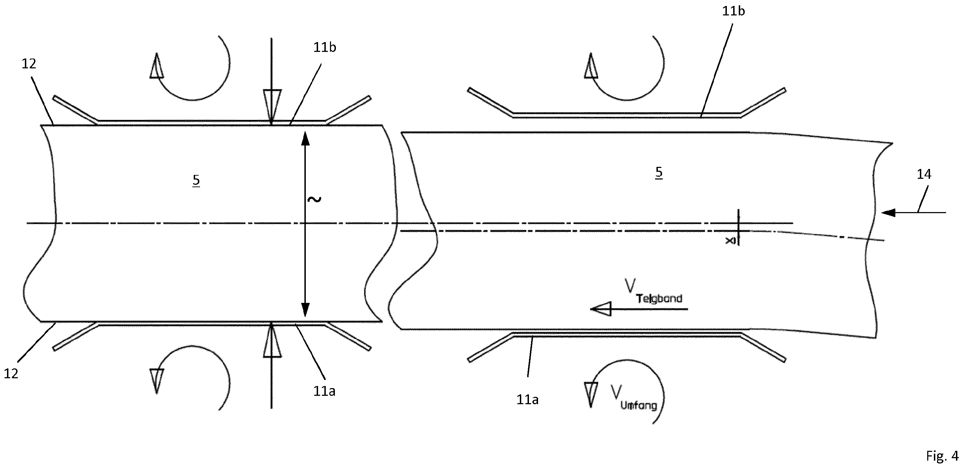

Die Exzenter 29, 30 sind gegenläufig angetrieben, weswegen sich die gegenläufige pulsierende Bewegung der Drückelemente 11a, 11b ergibt, die durch umlaufende Pfeile in Fig. 4 dargestellt sind.

Zwischen den Antriebsenden 27, 28 sind die Trägerelemente 25, 26, mit zueinander hinweisenden Führungsbereichen linear hinsichtlich ihrer Längserstreckung verschiebblich aneinander geführt, wozu an einem Trägerelement 25 z. B. eine C-Profilschiene 41 als erstes Führungselement angeordnet ist und an dem Trägerelement 26 Schlittenelemente 42 vorgesehen sind, die in der C-Profilschiene 41 hin- und her gleiten können. Es sei an dieser Stelle angemerkt, dass die gleitende Befestigung der Trägerelemente25, 26 aneinander natürlich auch durch völlig andere Führungselemente, wie Führungsstangen, Führungsnuten oder anders ausgebildete Führungsschienen z. B. in Form von T-Schienen ausgeführt sein kann.

Die Antriebswelle 31 zwischen den Getriebeeinheiten 32, 33 verläuft unterhalb der als Förderband ausgebildeten Fördereinrichtung 14, sodass die auf den Exzentern 29, 30 aufsitzenden Trägerelemente 25, 26 mit den daran angeordneten Drückorganen 11 unmittelbar über der Oberfläche der Fördereinrichtung 7 angeordnet werden können, sodass sie darauf geführte Teigbahnen mit Sicherheit erfassen können.

Beim Ausführungsbeispiel sind die Drückorgane 11 als die Randbereiche des Teigbandes beaufschlagende streifenartige Elemente 50 ausgebildet, deren Ein- und Auslaufenden 51 von den Randbereichen weggebogen sind.

Die Drückorgane 11 bzw. Elemente 50 können federnd an den Trägerelementen 25, 26 gelagert werden oder auch in Förderrichtung 14 des Teigbandes 5 mit Schlupf an ihrem Trägerelement 25, 26 gelagert sein.

Die Trägerelemente 25, 26 sind mit Langlöchern 52 versehen, die sich in Längsrichtung der Trägerelemente 25, 26 erstrecken und damit quer zur Förderrichtung 14. Die Drückorgane 11 können im Bereich der Langlöcher 52 einstellbar an die Trägerelemente 25, 26 angeschraubt werden und damit auch in andere Drückorgane 11 ausgetauscht werden.

Es liegt auch im Rahmen der Erfindung, die Trägerelemente zusammen mit den jeweils daran befestigten Drückorganen 11a und 11b als Austauschmodule 53 auszubilden, wobei die Austauschmodule zusammen mit den an ihnen befestigten Drückorganen aus der Vorrichtung 10 entnommen werden können.

In weiterer Ausgestaltung der Erfindung ist es möglich, die Drückorgane 11 nicht unbedingt auf einer Kreisbahn oder kreisähnlichen Bahn umlaufend zu führen, vorteilhaft ist auch eine mitfahrende Bewegung, wobei z. B. in dem die gesamte Vorrichtung 10 in Förderrichtung 14 linear vor- und zurückbewegt wird und dabei die synchron pulsierende Bewegung zur seitlichen Verschiebung des Teigbandes 5 überlagert wird. In diesem Fall ist auch eine in Richtung der Teigbänder 5 geführte pulsierende Bewegung der Drückorgane 11 beispielsweise mit Luft- oder Hydraulikzylindern möglich.

Darüber hinaus können die Drückorgane 11 auch als umlaufend angetriebene Förderbänder ausgebildet sein, um die Ränder 12 des oder der Teigbänder 5 in Förderrichtung zu beaufschlagen.

**BEZUGSZEICHENLISTE**

| | | | |
|---|---|---|---|
| 1 | Produktionslinienabschnitt | 25 | Trägerelement |
| 2 | Teigbahn (breit) | 26 | Trägerelement |
| 3 | Schneidevorrichtung | 27 | Antriebsende v. 25 |
| 4 | Schneidscheiben | 28 | Antriebsende v. 26 |
| 5 | Teigbahn (schmal) | 29 | Exzenter |
| 6 | Spreizband | 30 | Exzenter |
| 7 | Fördereinrichtung | 31 | Antriebswelle |
| 8 | Stanzvorrichtung | 32 | Getriebeeinheit |
| 9 | Teigdreieck | 33 | Getriebeeinheit |
| 10 | Vorrichtung | 34 | Elektromotor |
| 11 | Drückorgan | | |
| 12 | Rand v. 5 | 40 | Führungsbereich |
| 13 | Antriebsmittel | 41 | C-Profilschiene |
| 14 | Förderrichtung | 42 | Schlittenelement |
| 20 | Exzentervorrichtung | 50 | Elemente |
| 21 | Drehachse | 51 | Ein/Auslaufende |
| | | 52 | Langloch |
| | | 53 | Austauschmodul |

## Patentansprüche

1. Vorrichtung (10) zur seitlichen Beaufschlagung wenigstens eines auf einer Fördereinrichtung (7) aufliegenden Teigbandes (5), mit wenigstens einem Drückorgan (11) zum Einwirken auf wenigstens einen Rand (12) des Teigbandes (5), wobei das wenigstens eine Drückorgan (11) durch wenigstens ein Antriebsmittel (13) bezogen auf den wenigstens einen Rand (12) bewegbar geführt ist, **dadurch gekennzeichnet, dass** das wenigstens eine Drückorgan (11) zum verschiebenden Einwirken bei der Beaufschlagung des Randes (12) des Teigbandes (5) überlagert zu der gegen den Rand (12) geführten Bewegung in Förderrichtung (14) des Teigbandes (5) antreibbar ist.

2. Vorrichtung nach Anspruch 1, **dadurch gekennzeichnet, dass** das wenigstens eine Drückorgan (11) im Randbereich des Teigbandes (5) auf einer Kreisbahn oder kreisähnlichen Bahn umlaufend oder durch eine lineare Antriebseinheit in Förderrichtung (14), und gegen den wenigstens einen Rand (12) des Teigbandes antreibbar ist.

3. Vorrichtung nach Anspruch 1 oder 2, **dadurch gekennzeichnet, dass** jeweils zwei sich i. w. gegenüberliegende Drückorgane (11) benachbart zu beiden Randbereichen des Teigbandes (5) angeordnet sind, wobei die Drückorgane (11) gegenläufig synchron pulsierend in Richtung der Ränder (12) des Teigbandes (5) antreibbar sind.

4. Vorrichtung nach einem der vorhergehenden Ansprüche, **dadurch gekennzeichnet, dass** die Bewegungskomponente des oder der Drückorgane(s) (11) in Förderrichtung (14) des Teigbandes (5) einstellbar ist.

5. Vorrichtung nach einem der vorhergehenden Ansprüche, **dadurch gekennzeichnet, dass** die Drückorgane (11) einzeln oder in Gruppen durch umlaufende Exzenter (29, 30) gelagert sind, deren Drehachsen (21) rechtwinkelig zur Förderrichtung (14) angeordnet sind.

6. Vorrichtung nach einem der vorangehenden Ansprüche, **dadurch gekennzeichnet, dass** mehrere Drückorgane (11a, 11 b) zur Beaufschlagung jeweils einer Randseite einer Mehrzahl von nebeneinander geführten Teigbändern (5) gemeinsam an einem schienenartigen Trägerelement (25, 26) befestigt sind, das wenigstens einseitig auf einem umlaufenden Exzenter (29, 30) gelagert ist.

7. Vorrichtung nach Anspruch 6, **dadurch gekennzeichnet, dass** die Trägerelemente (25, 26) der Drückorgane (11) beider Ränder (12) des Teigbandes (5) parallel zueinander geführt sind.

8. Vorrichtung nach Anspruch 7, **dadurch gekennzeichnet, dass** die Drückorgane (11) der beiden Ränder (12) des Teigbandes (5) jeweils an gegenläufigen Exzentern (29, 30) einzeln oder in Gruppen gelagert sind, wobei die Exzenter (29, 30) an ein gemeinsames Antriebsmittel (13) angekoppelt sind.

9. Vorrichtung nach einem der vorhergehenden Ansprüche, **dadurch gekennzeichnet, dass** der Beaufschlagungshub der Drückorgane (11) in Querrichtung zu den Teigbändern (5) im Bereich von 1 - 10 mm liegt.

10. Vorrichtung nach einem der vorhergehenden Ansprüche, **dadurch gekennzeichnet, dass** die Drückorgane (11) als die Ränder (12) des Teigbandes (5) beaufschlagende streifenartige Elemente (50) ausgebildet sind.

11. Vorrichtung nach einem der vorhergehenden Ansprüche, **dadurch gekennzeichnet, dass** die Drückorgane (11) federnd gelagert sind und / oder in Förderrichtung des Teigbandes (5) mit Schlupf an ihrem Trägerelement (25, 26) gelagert sind.

12. Vorrichtung nach einem der vorhergehenden Ansprüche, **dadurch gekennzeichnet, dass** die Drückorgane (11) bezogen auf den zu beaufschlagenden Rand der Teigbahn (5) einstellbar an ihrem Trägerelement (25, 26) angeordnet sind.

13. Vorrichtung nach einem der vorhergehenden Ansprüche, **dadurch gekennzeichnet, dass** die Drückorgane (11) austauschbar an ihren Trägerelementen (25, 26) angeordnet sind oder schienenartige Trägerelemente (25, 26) einer Mehrzahl von Drückorganen (11) einer Randseite des Teigbandes (5) als Austauschmodule (53) ausgebildet sind.

14. Verfahren zur seitlichen Beaufschlagung wenigstens eines auf einer Fördereinrichtung (7) aufliegenden Teigbandes (5), mit folgenden Verfahrensschritten:
- Vorsehen wenigstens eines Drückorgans zur Einwirkung auf wenigstens einen Rand des Teigbandes bezogen auf die Fördereinrichtung sowie Antreiben des wenigstens einen Drückorgans (11) durch ein Antriebsmittel (13) bezogen auf den wenigstens einen Rand (12), **gekennzeichnet durch** folgende Verfahrensschritte:
- Beaufschlagen des Randes (12) des Teigbandes (5) durch das wenigstens eine Drückorgan (11) zum Zwecke der seitlichen Verschiebung in einer überlagerten Bewegung, wobei die Bewegung einerseits gegen den Rand (12) geführt ist und andererseits in Förderrichtung des Teigbandes (5) gerichtet ist.

15. Verfahren nach Anspruch 14, **gekennzeichnet durch** Kopplung der Bewegung einer Mehrzahl von die linken Ränder des Teigbandes (5) beaufschlagenden Drückorgane (11a) bzw. die rechten Ränder der Teigbänder (5) beaufschlagenden Drückorgane (11 b) durch starre Trägerelemente (25, 26) und parallele Führung der Trägerelemente (25, 26) aneinander.

## Claims

1. An apparatus (10) for laterally acting upon at least one dough sheet (5) placed on a conveying device (7), comprising at least one pushing member (11) for acting upon at least one edge (12) of the dough sheet (5), the at least one pushing member (11) being guided movably relative to the at least one edge (12) by at least one drive means (13), **characterized in that** the at least one pushing member (11) can be driven for displacing movement when the edge (12) of the dough sheet (5) is acted upon superimposed on the movement guided against the edge (12) in the conveying direction (14) of the dough sheet (5).

2. The apparatus according to claim 1, **characterized in that** the at least one pushing member (11) in the edge region of the dough sheet (5) can be driven in rotation on a circular or nearly circular path or by a linear drive unit in the conveying direction (14) and against the at least one edge (12) of the dough sheet.

3. The apparatus according to claim 1 or 2, **characterized in that** two substantially opposite pushing members (11) are respectively arranged adjacent to both edge regions of the dough sheet (5), wherein the pushing members (11) can be driven in opposite directions in synchronously pulsating movement in the direction of the edges (12) of the dough sheet (5).

4. The apparatus according to any one of the preceding claims, **characterized in that** the component of movement of the pushing member/s (11) is adjustable in the conveying direction (14) of the dough sheet (5).

5. The apparatus according to one of the preceding claims, **characterized in that** the pushing members (11) are supported individually or in groups on rotating eccentrics (29, 30) the axes of rotation (21) of which are arranged at right angles to the conveying direction (14).

6. The apparatus according to one of the preceding claims, **characterized in that** a plurality of pushing members (11a, 11b) are together attached to a rail-like support element (25, 26) which is supported on a rotating eccentrics (29, 30) for acting upon a respective edge of a plurality of dough sheets (5) guided next to each other.

7. The apparatus according to claim 6, **characterized in that** the support elements (25, 26) of the pushing members (11) of both edges (12) of the dough sheet (5) are guided parallel to each other.

8. The apparatus according to claim 7, **characterized in that** the pushing members (11) of the two edges (12) of the dough sheet (5) are each, individually or in groups, supported on counter-rotating eccentrics (29, 30), the eccentrics (29, 30) being coupled to a common drive means (13).

9. The apparatus according to any one of the preceding claims, **characterized in that** the working stroke of the pushing members (11) in the transverse direction to the dough sheets (5) is in the range of 1 - 10 mm.

10. The apparatus according to any one of the preceding claims, **characterized in that** the pushing members (11) are configured as strip-like elements (50) acting upon the edges (12) of the dough sheet (5).

11. The apparatus according to any one of the preceding claims, **characterized in that** the pushing members (11) are spring-mounted and/or are mounted with slip on their support element (25, 26) in the conveying direction of the dough sheet (5).

12. The apparatus according to any one of the preceding claims, **characterized in that** the pushing members (11) are arranged on their support element (25, 26) adjustably with respect to the edge of the dough sheet (5) or of the dough piece to be acted upon.

13. The apparatus according to any one of the preceding claims, **characterized in that** the pushing members (11) are exchangeably arranged on their support elements (25, 26) or the rail-like support elements (25, 26) of a plurality of pushing members (11) of an edge of the dough sheet (5) are configured as exchangeable modules (53).

14. A method for laterally acting upon least one dough sheet (5) placed on a conveying device (7), comprising the step of:
- providing at least one pushing member for acting upon at least one edge of the dough sheet relative to the conveying device, and driving of the at least one pushing member (11) by a drive means (13) relative to the at least one edge (12), **characterized by** the following steps:
- acting upon the edge (12) of the dough sheet (5) by the at least one pushing member (11) for lateral displacement in a superimposed movement, wherein the movement is directed against the edge (12) on the one hand and guided in the conveying direction of the dough sheet (5) on the other hand.

15. The method according to claim 14, **characterized by** coupling the movement of a plurality of pushing members (11a) acting on the left edges of the dough sheets (5) or pushing members (11b) acting on the right edges of the dough sheets (5) by rigid support elements (25, 26) and guiding the support elements (25, 26) parallel to each other.

## Revendications

1. Dispositif (10) pour appliquer latéralement une pression à au moins une bande de pâte (5) reposant sur un dispositif de transport (7), avec au moins un organe de pression (11) pour agir sur au moins un bord (12) de la bande de pâte (5), l'au moins un organe de pression (11) étant orienté de manière mobile par rapport à l'au moins un bord (12) par au moins un moyen d'entraînement (13), **caractérisé en ce que** l'au moins un organe de pression (11) peut être entraîné pour agir en translation lors de l'application de pression au bord (12) de la bande de pâte (5) superposé au mouvement orienté contre le bord (12) dans le sens du transport (14) de la bande de pâte (5).

2. Dispositif selon la revendication 1, **caractérisé en ce que** l'au moins un organe de pression (11) dans la zone de bord de la bande de pâte (5) peut être entraîné en rotation sur une trajectoire circulaire ou une trajectoire semblable à un cercle ou par une unité d'entraînement linéaire dans le sens du transport (14), et contre l'au moins un bord (12) de la bande de pâte.

3. Dispositif selon la revendication 1 ou 2, **caractérisé en ce que** respectivement deux organes de pression (11) se faisant sensiblement face sont disposés au voisinage des deux zones de bord de la bande de pâte (5), moyennant quoi les organes de pression (11) peuvent être entraînés de manière pulsée synchrone en sens inverse au sens des bords (12) de la bande de pâte (5).

4. Dispositif selon l'une des revendications précédentes, **caractérisé en ce que** la composante de mouvement du ou des organes de pression (11) peut être réglée dans le sens du transport (14) de la bande de pâte (5) .

5. Dispositif selon l'une des revendications précédentes, **caractérisé en ce que** les organes de pression (11) sont montés individuellement ou par groupes par des éléments excentrés (29, 30) tournants dont les axes de rotation (21) sont perpendiculaires au sens de transport (14) .

6. Dispositif selon l'une des revendications précédentes, **caractérisé en ce que** plusieurs organes de pression (11a, 11b) destinés à appliquer une pression respectivement sur un côté de bord d'une pluralité de bandes de pâte (5) orientées les unes à côté des autres sont fixés ensemble à un élément de support (25, 26) semblable à un rail, qui est monté au moins sur un côté d'un élément excentré (29, 30) tournant.

7. Dispositif selon la revendication 6, **caractérisé en ce que** les éléments de support (25, 26) des organes de pression (11) des deux bords (12) de la bande de pâte (5) sont orientés parallèlement les uns aux autres.

8. Dispositif selon la revendication 7, **caractérisé en ce que** les organes de pression (11) des deux bords (12) de la bande de pâte (5) sont respectivement montés individuellement ou par groupes, sur des éléments excentrés (29, 30) tournant en sens inverse, les éléments excentrés (29, 30) étant accouplés à un moyen d'entraînement commun (13).

9. Dispositif selon l'une des revendications précédentes, **caractérisé en ce que** l'élévation due à l'application de pression des organes de pression (11) dans le sens transversal par rapport aux bandes de pâte (5) est comprise entre 1 et 10 mm.

10. Dispositif selon l'une des revendications précédentes, **caractérisé en ce que** les organes de pression (11) sont construits sous la forme d'éléments en forme de bande (50) appliquant une pression sur les bords (12) de la bande de pâte (5).

11. Dispositif selon l'une des revendications précédentes, **caractérisé en ce que** les organes de pression (11) sont montés sur ressorts et/ou sont montés de manière coulissante sur leur élément de support (25, 26) dans le sens de transport de la bande de pâte (5).

12. Dispositif selon l'une des revendications précédentes, **caractérisé en ce que** les organes de pression (11) sont disposés sur leur élément de support (25, 26) de manière réglable par rapport au bord sur lequel appliquer la pression sur la bande de pâte (5).

13. Dispositif selon l'une des revendications précédentes, **caractérisé en ce que** les organes de pression (11) sont disposés de manière interchangeable sur leurs éléments de support (25, 26) ou que des éléments de support (25, 26) en forme de rails d'une pluralité d'organes de pression (11) d'un côté de bord de la bande de pâte (5) sont construits sous forme de modules interchangeables (53).

14. Procédé d'application latérale de pression sur au moins une bande de pâte (5) reposant sur un dispositif de transport (7), comprenant les étapes de procédé suivantes :
- fourniture d'au moins un organe de pression pour appliquer une pression sur au moins un bord de la bande de pâte par rapport au dispositif de transport ainsi qu'entraînement dudit au moins un organe de pression (11) par un moyen d'entraînement (13) par rapport audit au moins un bord (12), **caractérisé par** les étapes de procédé suivantes :
- application de pression au bord (12) de la bande de pâte (5) par l'au moins un organe de pression (11) dans le but de le déplacer latéralement selon un mouvement superposé, le mouvement étant d'une part orienté vers le bord (12) et d'autre part orienté dans le sens de transport de la bande de pâte (5).

15. Procédé selon la revendication 14, **caractérisé par** le couplage du mouvement d'une pluralité d'organes de pression (11a) appliquant une pression sur les bords gauches de la bande de pâte (5) ou d'organes de pression (11b) appliquant une pression sur les bords droits des bandes de pâte (5) par des éléments de support rigides (25, 26) et de l'orientation parallèle des éléments de support (25, 26) l'un par rapport à l'autre.
